# EUROPÄISCHE PATENTSCHRIFT

(11) **EP 4 577 416 B1**
(45) Veröffentlichungstag und Bekanntmachung des Hinweises auf die Patenterteilung: **09.12.2026**
(21) Anmeldenummer: 23745070.5
(22) Anmeldetag: 13.07.2023
(51) Int. Cl.: B60C 11/03, B60C 11/12, B60C 11/13

(54) **FAHRZEUGLUFTREIFEN**
PNEUMATIC VEHICLE TIRE
PNEU DE VÉHICULE

(30) Priorität: 25.08.2022 DE 102022208785
(43) Veröffentlichungstag der Anmeldung: 02.07.2025
(73) Patentinhaber: Continental Reifen Deutschland GmbH, 30175 Hannover (DE)
(72) Erfinder: FUCHS, Artur, 30175 Hannover (DE); BROCKMANN, Jürgen, 30175 Hannover (DE); HEINHAUPT, Torsten, 30175 Hannover (DE); SENG, Matthias, 30175 Hannover (DE); BAUER, Claudia, 30175 Hannover (DE)
(74) Vertreter: Continental Corporation
(86) Internationale Anmeldenummer: PCT/DE2023/200144
(87) Internationale Veröffentlichungsnummer: WO 2024/041705

(56) Entgegenhaltungen:
- WO-A1-2020/012279
- DE-A1- 102019 131 570
- US-A1- 2020 130 418

## Beschreibung

Die Erfindung betrifft einen Fahrzeugluftreifen mit einem laufrichtungsgebunden ausgeführten Laufstreifen mit V-förmig zueinander verlaufenden Schrägrillen und jeweils zumindest zwei zwischen in Umfangsrichtung benachbarten Schrägrillen verlaufenden, vorzugsweise bezüglich der Umfangsrichtung gegensinnig zu den Schrägrillen geneigten, weiteren Rillen,
wobei die Schrägrillen und die weiteren Rillen den Laufstreifen in schulterseitige Profilblöcke, halbmittige Profilblöcke, zu den in der einen Laufstreifenhälfte liegenden, halbmittigen Profilblöcken benachbarte mittlere Profilblöcke und zu den in der anderen Laufstreifenhälfte liegenden, halbmittigen Profilblöcken benachbarte mittlere Profilblöcke gliedern,
wobei die Schrägrillen abwechselnd vor der Reifenäquatorialebene endende, erste Schrägrillen mit einem in einen mittleren Profilblock hineinverlaufenden Rillenendabschnitt und die mittleren Profilblöcke mitbegrenzende, zweite Schrägrillen sind,
wobei die zu dem einen Laufstreifenrand verlaufenden ersten Schrägrillen zu den zu dem anderen Laufstreifenrand verlaufenden ersten Schrägrillen und die zu dem einen Laufstreifenrand verlaufenden zweiten Schrägrillen zu den zu dem anderen Laufstreifenrand verlaufenden zweiten Schrägrillen in Umfangsrichtung versetzt sind.

Ein derartiger Fahrzeugluftreifen ist beispielsweise aus der EP 3 785 938 B1 bekannt. Dieser Reifen weist einen laufrichtungsgebunden ausgeführten Laufstreifen mit einer im Bereich der Reifenäquatorialebene verlaufenden, zentralen Umfangsrille, V-förmig zueinander verlaufenden Schrägrillen sowie mit jeweils zwei zwischen in Umfangsrichtung benachbarten Schrägrillen verlaufende, bezüglich der Umfangsrichtung gegensinnig zu den Schrägrillen geneigten, weiteren Rillen auf. Die Schrägrillen sind in Umfangsrichtung abwechselnd vor der Reifenäquatorialebene endende, erste Schrägrillen mit einem in einen mittleren Profilblock hineinverlaufenden Rillenendabschnitt und laufstreifeninnenseitig über die ersten Schrägrillen hinausragende, an den außenseitigen Knickstellen der zickzack-förmig verlaufenden Umfangsrille einmündende, zweite Schrägrillen. Die an der zentralen Umfangsrille liegenden mittleren Profilblöcke weisen eine hohe Umfangs- und Quersteifigkeit auf, wodurch gute Handlingeigenschaften auf schneebedeckter und trockener Fahrbahn erzielt werden.

Ein weiterer Fahrzeugluftreifen der eingangs genannten Art ist aus der WO 2012/012279 A1 bekannt. Dieser Fahrzeugluftreifen weist einen laufrichtungsgebunden ausgeführten Laufstreifen mit V-förmig zueinander verlaufenden Schrägrillen sowie mit je zwei zwischen in Umfangsrichtung benachbarten Schrägrillen ausgebildeten, weiteren Rillen auf, wobei die Schrägrillen und die weiteren Rillen in Kombination mit die Reifenäquatorialebene kreuzenden, in die Schrägrillen einmündenden Rillen den Laufstreifen in schulterseitige Profilblöcke, halbmittige Profilblöcke und mittlere Profilblöcke gliedern. Zu den mittleren Profilblöcken gehören solche, welche zu den in der einen Laufstreifenhälfte liegenden, halbmittigen Profilblöcken benachbart sind, und ferner solche, die zu den in der anderen Laufstreifenhälfte liegenden, halbmittigen Profilblöcken benachbart sind. Die Schrägrillen sind vor der Reifenäquatorialebene endende, erste Schrägrillen und zweite Schrägrillen mit jeweils einem in einen mittleren Profilblock hineinverlaufenden Rillenendabschnitt, wobei die ersten Schrägrillen in Umfangsrichtung abwechselnd mit den zweiten Schrägrillen ausgebildet sind. Dieser Reifen soll gute Gripeigenschaften unter in axialer Richtung wirkender Belastung aufweisen, wobei sich in den Profilblöcken ferner in in Umfangsrichtung verlaufenden Spikespuren angeordnete Spikes unterbringen lassen sollen.

Aus der US 2020/0130418 A1 ist ein Fahrzeugluftreifen mit einem laufrichtungsgebunden ausgeführten Laufstreifen mit V-förmig zueinander verlaufenden Schrägrillen, welche erste und zweite Schrägrillen sind, sowie mit jeweils drei zwischen in Umfangsrichtung benachbarten Schrägrillen ausgebildeten weiteren Rillen bekannt, wobei die Schrägrillen und die weiteren Rillen den Laufstreifen in schulterseitige Profilblöcke, halbmittige Profilblöcke und mittlere Profilblöcke gliedern. Die ersten Schrägrillen enden vor der Reifenäquatorialebene an einem mittleren Profilblock. Die zweiten Schrägrillen weisen jeweils einen über die Reifenäquatorialebene hinausverlaufenden, zwischen zwei mittleren Profilblöcken ausgebildeten und in eine zum jeweils anderen Laufstreifenrand verlaufende, zweite Schrägrille einmündenden Rillenendabschnitt auf, in welchem eine zwei mittlere Profilblöcke aneinander anbindende Grundanhebung ausgebildet ist. Dieser Fahrzeugluftreifen sollen eine gleichmäßige Druckverteilung in der Bodenaufstandsfläche und ein gutes Wasserdrainageverhalten aufweisen.

Fahrzeugluftreifen der eingangs genannten Art eignen sich - sofern der Laufstreifen aus einem entsprechenden, an sich bekannten Gummimaterial besteht - für den Ganzjahreseinsatz. Bei Ganzjahresreifen ist es von entscheidender Bedeutung, dass sowohl gute Fahreigenschaften auf trockener Fahrbahn als auch gute Fahreigenschaften auf schneebedeckter Fahrbahn sichergestellt sind. Um gute Schneegriffeigenschaften zu ermöglichen, ist es dabei üblich, die Profilblöcke der Laufstreifen mit Einschnitten zu versehen. Damit weiterhin gute Fahreigenschaften auf trockener Fahrbahn aufrechterhalten werden, ist dabei darauf zu achten, dass die Steifigkeit der Profilblöcke nicht zu stark reduziert wird, da dies die Reifenhaftung und die Kraftübertragung zum Untergrund beeinträchtigen kann. In dieser Hinsicht sind die mittleren Profilblöcke aufgrund der beim Abplatten des Laufstreifens in diesem Laufstreifenbereich auftretenden Belastungen von besonderer Bedeutung.

Der Erfindung liegt die Aufgabe zugrunde, einen Fahrzeugluftreifen der eingangs genannten Art im Hinblick auf seine Fahreigenschaften auf trockener Fahrbahn weiter zu verbessern.

Gelöst wird die gestellte Aufgabe erfindungsgemäß dadurch, dass die zweiten Schrägrillen jeweils einen über die Reifenäquatorialebene hinausverlaufenden, zwischen zwei mittleren Profilblöcken ausgebildeten und in eine zum jeweils anderen Laufstreifenrand verlaufende zweite Schrägrille einmündenden Rillenendabschnitt aufweisen, in welchem jeweils zumindest eine, insbesondere genau eine, die Tiefe der zweiten Schrägrille lokal verringernde Grundanhebung ausgebildet ist, welche zwei mittlere Profilblöcke aneinander anbindet, wobei die weiteren Rillen derart ausgebildet sind, dass die halbmittigen Profilblöcke abwechselnd erste halbmittige Profilblöcke mit einer an der Laufstreifenperipherie entlang einer zu den Blockkanten übereinstimmend beabstandeten Blockmittellinie gemessenen ersten Blocklänge und zweite halbmittige Profilblöcke mit einer an der Laufstreifenperipherie entlang einer zu den Blockkanten übereinstimmend beabstandeten Blockmittellinie gemessenen, gegenüber der ersten Blocklänge größeren, zweiten Blocklänge sind, wobei beim Abrollen des Reifens bei Vorwärtsfahrt jeweils der erste halbmittige Profilblock vor dem von ihm durch eine erste Schrägrille getrennten, zweiten halbmittigen Profilblock in den Untergrund eintritt, wobei in jedem zweiten halbmittigen Profilblock jeweils ein Einschnitt mit einer Breite von 0,6 mm bis 1,0 mm und einer Tiefe von 70% bis 100%, insbesondere von bis zu 75%, der Profiltiefe ausgebildet ist, welcher, in Draufsicht betrachtet, gerade, zur Umfangsrichtung gegensinnig zu den Schrägrillen geneigt und zur Umfangsrichtung unter einem Winkel von 20° bis 30° verläuft sowie den zweiten halbmittigen Profilblock bezüglich seiner Blocklänge vorzugsweise mittig in zwei Blocksegmente teilt.

Sämtliche mittleren Profilblöcke sind daher über Grundanhebungen miteinander verbunden und derart gegeneinander abgestützt, wodurch eine sich über den Reifenumfang erstreckende, zusammenhängende Profilpositivstruktur bereitgestellt ist, welche eine höhere Umfangs- und Quersteifigkeit als vergleichbare bekannte Profilpositivstrukturen aufweist. Diese zusammenhängende Profilpositivstruktur sorgt für verbesserte Fahreigenschaften auf trockener Fahrbahn sowie für besonders vorteilhaft ausbalancierte Fahreigenschaften auf trockener und auf schneebedeckter Fahrbahn.

Der Einschnitt ist für die Beweglichkeit des zweiten halbmittigen Profilblocks und damit für dessen Deformationsverhalten beim Abplatten und somit für die Fahreigenschaften auf trockener Fahrbahn vorteilhaft.

Eine bevorzugte Ausführung ist dadurch gekennzeichnet, dass die Grundanhebung zumindest eines, insbesondere sämtliche, folgender Merkmale aufweist:
a) die Grundanhebung reicht bis zur am einmündenden Rillenendabschnitt der zweiten Schrägrille liegenden Rillenmündung oder weist zu dieser einen entlang der Rillenmittellinie am Niveau des Rillengrundes ermittelten Abstand von bis zu 2,0 mm auf,
b) die Grundanhebung ist in radialer Richtung durch eine Deckfläche begrenzt, welche in einer in radialer Richtung ermittelten konstanten Tiefe von 30% bis 70%, insbesondere von 45% bis 55%, der Profiltiefe verläuft,
c) die Grundanhebung weist - ermittelt entlang der Rillenmittellinie der zweiten Schrägrille sowie am Niveau des Rillengrundes der zweiten Schrägrille - eine Länge von 8,0 mm bis 20,0 mm, insbesondere von 10,0 mm bis 16,0 mm, auf
d) die Grundanhebung ist mit einem die Grundanhebung in Erstreckungsrichtung der zweiten Schrägrille insbesondere mittig durchquerender Einschnitt mit einer Breite von 0,4 mm bis 0,8 mm versehen, welcher vorzugsweise gegenüber dem Niveau der Deckfläche eine Tiefe von zumindest 1,5 mm aufweist.

Die Positionierung der Grundanhebung gemäß Merkmal a) ist im Hinblick auf das Wasserdrainageverhalten günstig.

Die "Höhe" der Grundanhebung gemäß Merkmal b) und die Länge der Grundanhebung gemäß Merkmal c) sorgen jeweils für einen vorteilhaften Kompromiss zwischen der versteifenden Wirkung der Grundanhebung und dem Wasserdrainageverhalten.

Der Einschnitt gemäß Merkmal d) verbessert das Wasserdrainageverhalten im Bereich der Grundanhebung.

Eine weitere bevorzugte Ausführung ist, dadurch gekennzeichnet, dass in jedem mittleren Profilblock an jeder Seite des in ihn hineinverlaufenden

Rillenendabschnittes der jeweiligen ersten Schrägrille jeweils zumindest ein in Draufsicht zum hineinverlaufenden Rillenendabschnitt bezüglich der Umfangsichtung gleichsinnig geneigter, in die jeweils angrenzende weitere Rille einmündender Einschnitt mit einer Breite von 0,4 mm bis 1,2 mm und einer maximalen Tiefe von zumindest 3,0 mm und höchstens 100% der Profiltiefe und zumindest ein zwischen den einmündenden Einschnitten verlaufender und zu diesen bezüglich der Umfangsrichtung gegensinnig geneigter Verbindungseinschnitt mit einer Tiefe von 1,2 mm bis 2,5 mm und eine Breite von 0,4 mm bis 1,6 mm verläuft.

Die mittleren Profilblöcke sind daher jeweils mit einer speziellen Einschnittkombination aus zumindest zwei in die entsprechenden Rillen einmündenden Einschnitten und einem zwischen diesen Einschnitten verlaufenden Verbindungseinschnitt versehen, wobei diese Einschnittkombination den in den jeweiligen mittleren Profilblock hineinverlaufenden Rillenendabschnitt umgibt. Die tiefer ausgeführten, einmündenden Einschnitte öffnen sich beim Abplatten des Laufstreifens im Latsch (beim Durchlaufen am Untergrund) stärker als der seichter ausgeführte Verbindungseinschnitt, wodurch die einmündenden Einschnitte für den Schneegriff vorteilhafte Griffkanten zur Verfügung stellen. Der seichtere Verbindungseinschnitt sorgt in Kombination mit tiefer ausgeführten, einmündenden Einschnitten für eine gleichmäßige bzw. im Wesentlichen gleichmäßige Umfangs-und Quersteifigkeit der mittleren Profilblöcke, wodurch diese ein gleichmäßiges Verformungsverhalten sicherstellen, was für die Fahreigenschaften, insbesondere die Handlingeigenschaften, auf trockener Fahrbahn günstig ist.

Nachfolgend wird auf miteinander kombinierbare vorteilhafte Weiterentwicklung der letztgenannten bevorzugten Ausführung eingegangen.

Eine erste vorteilhafte Weiterentwicklung der letztgenannten bevorzugten Ausführung ist dadurch gekennzeichnet, dass jeder einmündende Einschnitt innerhalb des mittleren Profilblockes am Verbindungseinschnitt endet, sodass die einmündenden Einschnitte mit dem Verbindungseinschnitt eine U-förmige Einschnittkombination bilden. Dadurch wird die Steifigkeit der mittleren Profiblöcke auf gleichmäßige Weise und in deutlich begrenztem Ausmaß reduziert, sodass die mittleren Profiblöcke eine hohe und gleichmäßige Umfangs- und Quersteifigkeit aufweisen. Dies ist für die Handlingeigenschaften, insbesondere auf trockener Fahrbahn, von zusätzlichem Vorteil.

Eine zweite vorteilhafte Weiterentwicklung der letztgenannten bevorzugten Ausführung ist dadurch gekennzeichnet, dass jeder einmündende Einschnitt in einem in Verlängerung seiner Einschnittmittellinie ermittelten Abstand von 3,0 mm bis 10,0 mm, insbesondere von 4,0 mm bis 8,0 mm, vor einem den mittleren Profilblock mitbegrenzenden, einmündenden Rillenendabschnitt der entsprechenden zweiten Schrägrille endet. Dies ist ebenfalls für die Umfangs- und Quersteifigkeit der mittleren Profilblöcke und somit für die Handlingeigenschaften, insbesondere auf trockener Fahrbahn, vorteilhaft.

Eine dritte vorteilhafte Weiterentwicklung der letztgenannten bevorzugten Ausführung besteht darin, dass jeder einmündende Einschnitt zu den an den Schrägrillen ausgebildeten Blockkanten des mittleren Profilblockes jeweils einen senkrecht zu seiner Einschnittmittellinie ermittelten Abstand 40% bis 60%, insbesondere von 45% bis 55%, der senkrecht zu und zwischen den Blockkanten ermittelten maximalen Blockbreite des mittleren Profiblockes aufweist. Dies trägt zu einer gleichmäßigen Umfangs- und Quersteifigkeit der mittleren Profilblöcke bei.

Eine vierte vorteilhafte Weiterentwicklung der letztgenannten bevorzugten Ausführung ist dadurch gekennzeichnet, dass in jedem mittleren Profilblock zwischen den einmündenden Einschnitten ein den mittleren Profilblock in zwei Blocksegmente teilender, den Verbindungseinschnitt kreuzender Kurzeinschnitt mit einer Breite von 0,4 mm bis 1,6 mm, insbesondere von 0,6 mm bis 1,2 mm, und einer maximalem Tiefe von 70% bis 100% der Profiltiefe ausgebildet ist, wobei der Kurzeinschnitt in den in den mittleren Profilblock hineinverlaufenden Rillenendabschnitt der jeweiligen ersten Schrägrille und in den an mittleren Profilblock angrenzenden, einmündenden Rillenendabschnitt der jeweiligen zweiten Schrägrille einmündet. Die mittleren Profilblöcke sind somit in zwei Blocksegmente geteilt, wodurch deren Deformationsverhalten beim Durchlaufen des Footprints verbessert ist, was für die Fahreigenschaften auf trockener Fahrbahn vorteilhaft ist. Gleichzeitig sind durch den Kurzeinschnitt weitere Griffkanten an der Laufstreifenperipherie zur Verfügung gestellt, sodass auch die Schneegriffeigenschaften weiter verbessert sind. Der Kurzeinschnitt stellt somit eine besonders vorteilhafte Erweiterung der erwähnten, speziellen Einschnittkombination dar.

Eine erste vorteilhafte Variante der vierten vorteilhafte Weiterentwicklung besteht darin, dass der Kurzeinschnitt, in Draufsicht betrachtet, gerade oder gebogen sowie zur Umfangsrichtung jeweils unter einem Winkel von 30° bis 50°, insbesondere von 35° bis 45°, verläuft. Dies ist vor allem für das erwähnte Deformationsverhalten und damit für die Fahreigenschaften auf trockener Fahrbahn vorteilhaft.

Eine zweite vorteilhafte Variante der vierten vorteilhafte Weiterentwicklung besteht darin, dass der Kurzeinschnitt - in Draufsicht betrachtet und bezogen auf seine Einschnittmittellinie - in tangentialer Verlängerung der Rillenmittellinie der ersten Schrägrille, welche den in den zugehörigen mittleren Profilblock hineinverlaufenden Rillenendabschnitt aufweist, verläuft. Dies ist ebenfalls für das erwähnte Deformationsverhalten und damit für die Fahreigenschaften auf trockener Fahrbahn vorteilhaft.

Gemäß einer weiteren bevorzugten Ausführung verläuft der einmündende Rillenendabschnitt der zweiten Schrägrillen, in Draufsicht betrachtet, an seiner Einmündung zur Umfangsrichtung unter einem Winkel von 20° bis 40°, insbesondere von 25° bis 35°, und bevorzugt von zumindest 30°. Dieser Winkel verleiht dem Laufstreifenprofil im Bereich der Reifenäquatorialebene einen ausgeprägten zick-zack-förmigen Verlauf der aufeinanderfolgenden Rillenendabschnitte der zweiten Schrägrillen. Dadurch sammelt sich beim Fahren auf entsprechend tiefen Schnee sehr gut Schnee im Bereich der Rillenendabschnitt an, wodurch über den Effekt der Schnee-Schnee-Reibung die Schneeperformance weiter verbessert ist.

Eine weitere bevorzugte Ausführung ist dadurch gekennzeichnet, dass die weiteren Rillen, welche sich weiter laufstreifeninnenseitig befinden und in dieselbe endende, erste Schrägrille einmünden, in Draufsicht betrachtet, gerade und miteinander fluchtend verlaufen und/oder dass die weiteren Rillen, welche sich weiter laufstreichaußenseitig befinden, in Draufsicht betrachtet, gerade verlaufen und in Umfangsrichtung bezüglich der axialen Richtung versatzfrei aufeinanderfolgen. Dies ist für die Steifigkeit der erwähnten makroblockartigen Profilpositivstruktur und daher für die Trockenperformance vorteilhaft.

Eine weitere bevorzugte Ausführung ist dadurch gekennzeichnet, dass die Schrägrillen, in Draufsicht betrachtet, gerade oder durchgehend gebogen verlaufen oder dass sich die Schrägrillen, in Draufsicht betrachtet, jeweils aus einem gerade oder durchgehend gebogen verlaufenden, laufstreifeninnseitigen Rillenabschnitt, welcher mittlere Profilblöcke und halbmittige Profilblöcke mitbegrenzt, und einem gerade oder durchgehend gebogen verlaufenden, laufstreifenaußenseitigen Rillenabschnitt, welcher schulterseitige Profilblöcke mitbegrenzt, zusammensetzen.

Eine weitere bevorzugte Ausführung ist dadurch gekennzeichnet, dass die ersten Schrägrillen laufstreifeninnenseitig - bezogen auf die Rillenmittellinien - in einem in axialer Richtung ermittelten Abstand von 5,0 mm bis 15,0 mm vor der Reifenäquatorialebene enden. Dies ist für die Steifigkeit und das Biegeverhalten der mittleren Profilblöcke vorteilhaft und wirkt sich günstig auf Fahreigenschaften auf trockener Fahrbahn aus.

Weitere Merkmale, Vorteile und Einzelheiten der Erfindung werden nun anhand der Zeichnung, die schematisch ein Ausführungsbeispiel der Erfindung zeigt, näher beschrieben. Dabei zeigen
Fig. 1 eine vereinfachte Draufsicht auf eine Umfangsabschnitt eines in die Ebene abgewickelten Laufstreifens eines Fahrzeugluftreifens mit einer Ausführungsvariante der Erfindung,
Fig. 2 eine vergrößerte Draufsicht auf das Detail Z₂ der Fig. 1,
Fig. 3 einen Schnitt entlang der Linie III-III der Fig. 2,
Fig. 4 einen Schnitt entlang der Linie IV-IV der Fig. 2,
Fig. 5 einen Schnitt entlang der Linie V-V der Fig. 2,
Fig. 6 einen Schnitt entlang der Linie VI-VI der Fig. 2,
Fig. 7 einen Schnitt entlang der Linie VII-VII der Fig. 2,
Fig. 8 eine stark vergrößerte Draufsicht auf das Detail Z₈ der Fig. 1 und
Fig. 9 einen Schnitt entlang der Linie IX-IX der Fig. 8.

Gemäß der Erfindung ausgeführte Fahrzeugluftreifen sind Reifen für Kraftfahrzeuge, insbesondere für mehrspurige Kraftfahrzeuge, bevorzugt für Personenkraftwagen (PKWs), Vans (Transporter) oder SUVs, sowie vorzugsweise Reifen in Radialbauart für Felgen mit einem Felgendurchmesser von 18, 19, 20, 21, 22 oder 23 Zoll. Die Reifen sind insbesondere für den Ganzjahreseinsatz vorgesehen.

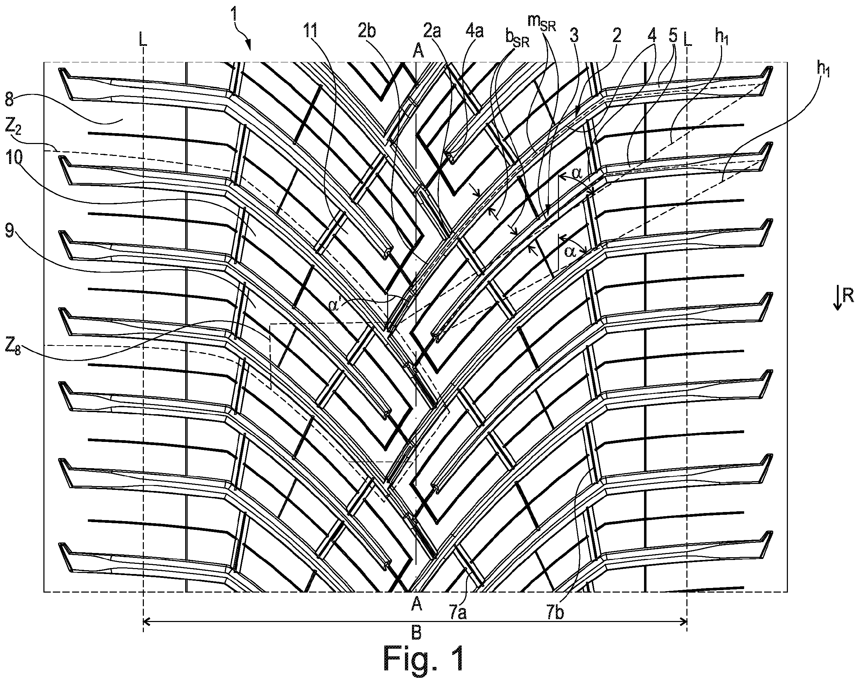

Fig. 1 zeigt eine Draufsicht auf einen Laufstreifen 1. Die Reifenäquatorialebene ist durch eine Linie A-A und die seitlichen Ränder der Bodenaufstandsfläche des Laufstreifens sind durch zwei Linien L gekennzeichnet. Die Bodenaufstandsfläche entspricht bekannter Weise dem statisch ermittelten Footprint (ermittelt mit einem auf einer Normfelge montierten Reifen, Last bei 70 % der maximalen Tragfähigkeit, Innendruck 85 % des Normdruckes, gemäß ETRTO-Standards) und weist in axialer Richtung eine Breite B auf. Der Laufstreifen 1 weist eine laufrichtungsgebundene Profilierung auf und ist derart am Fahrzeug zu montieren, dass er die durch den Pfeil R angedeutete Abrollrichtung bei Vorwärtsfahrt aufweist.

Der Laufstreifen 1 ist, wie an sich üblich, gemäß einem Verfahren der Pitchlängenvariation geräuschoptimiert und setzt sich aus in Umfangsrichtung aufeinanderfolgenden Pitches (gleichartig gestaltete Profilabschnitte) zusammen, wobei die in der einen Laufstreifenhälfte ausgebildeten Profilelemente um 30% bis 60%, vorzugsweise um mindestens 40%, einer mittleren Pitchlänge in Umfangsrichtung zu den in der anderen Laufstreifenhälfte ausgebildeten Profilelementen versetzt sind. Die mittlere Pichtlänge ist dabei der arithmetische Mittelwert der Pitchlängen sämtlicher Pitches.

Der Laufstreifen 1 ist mit in Draufsicht über die Laufstreifenbreite V- förmig zueinander verlaufenden, die Haupt(entwässerungs)rillen des Laufstreifens bildenden Schrägrillen 2, 3 versehen, wobei die Abrollrichtung des Reifens bei Vorwärtsfahrt derart ist, dass die Schrägrillen 2, 3 zuerst mit ihren laufstreifeninnenseitigen Enden in die Bodenaufstandsfläche eintreten. In jeder Laufstreifenhälfte folgt in Umfangsrichtung abwechselnd eine Schrägrille 2 auf eine Schrägrille 3. Die zu dem einen Laufstreifenrand verlaufenden Schrägrillen 2 sind zu den zum anderen Laufstreifenrand verlaufenden Schrägrillen 2 in Umfangsrichtung versetzt. Ferner sind daher auch die zu dem einen Laufstreifenrand verlaufenden Schrägrillen 3 zu den zum anderen Laufstreifenrand verlaufenden Schrägrillen 3 in Umfangsrichtung versetzt. Die Schrägrillen 2 laufen über die Reifenäquatorialebene (Linie A-A) hinaus und münden jeweils in eine zum anderen seitlichen Rand des Laufstreifens verlaufende Schrägrille 2 ein, weisen an dieser daher eine Rillenmündung 2a auf. Die Schrägrillen 3 enden laufstreifeninnenseitig vor der jeweiligen, zum anderen Laufstreifenrand verlaufenden Schrägrille 2. Die Schrägrillen 2 werden nachfolgend auch als "einmündende Schrägrillen 2" und die Schrägrillen 3 werden anschließend auch als "endende Schrägrillen 3" bezeichnet.

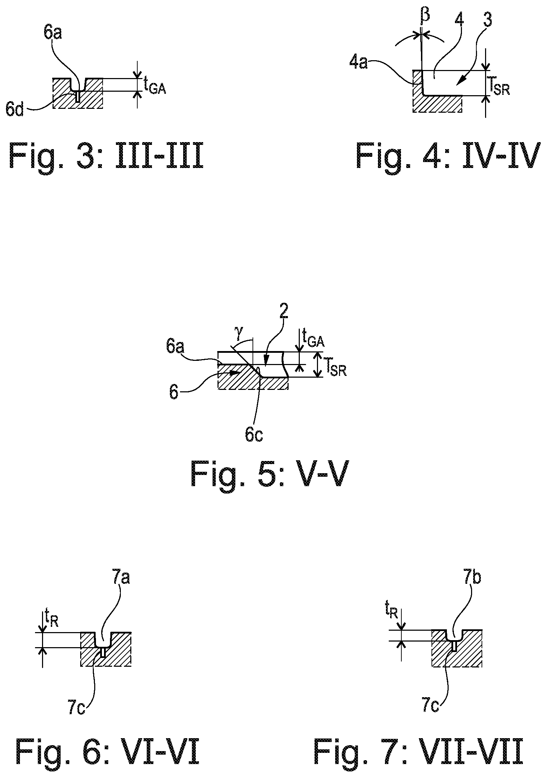

Die Schrägrillen 2, 3 weisen jeweils eine in Draufsicht dem Rillenverlauf folgende Rillenmittellinie m_{SR} auf, sind in radialer Richtung auf die jeweils vorgesehene Profiltiefe T_{SR} (Fig. 4: Schrägrille 3, Fig. 5: Schrägrille 2) von üblicherweise 6,5 mm bis 10,0 mm ausgeführt, weisen eine in Draufsicht senkrecht zur Rillenmittellinie m_{SR} an der Laufstreifenperipherie gemessene, in Richtung Laufstreifenrand kontinuierlich zunehmende Breite b_{SR} von 3,0 mm bis 7,0 mm auf und verlaufen - bezogen auf eine die Enden der zugehörigen Rillenmittellinie m_{SR} verbindende gerade Hilfslinie h₁ - zur Umfangsrichtung unter einem Winkel α von 50° bis 70°. Die zum selben Laufstreifenrand verlaufenden Schrägrillen 2 bzw. 3 verlaufen - bezogen auf die Rillenmittellinien m_{SR} - jeweils parallel zueinander, wobei der Winkel α der endenden Schrägrillen 3 um insbesondere 3° bis 10° größer ist als der Winkel α der einmündenden Schrägrillen 2.

Die Schrägrillen 2, 3 setzen sich beim gezeigten Ausführungsbeispiel jeweils aus einem in Draufsicht leicht gebogen verlaufenden, laufstreifeninnenseitigen Rillenabschnitt 4 und einem zur Umfangsrichtung gegenüber dem laufstreifeninnenseitigen Rillenabschnitt 4 stärker geneigten, schulterseitigen Rillenabschnitt 5 zusammen.

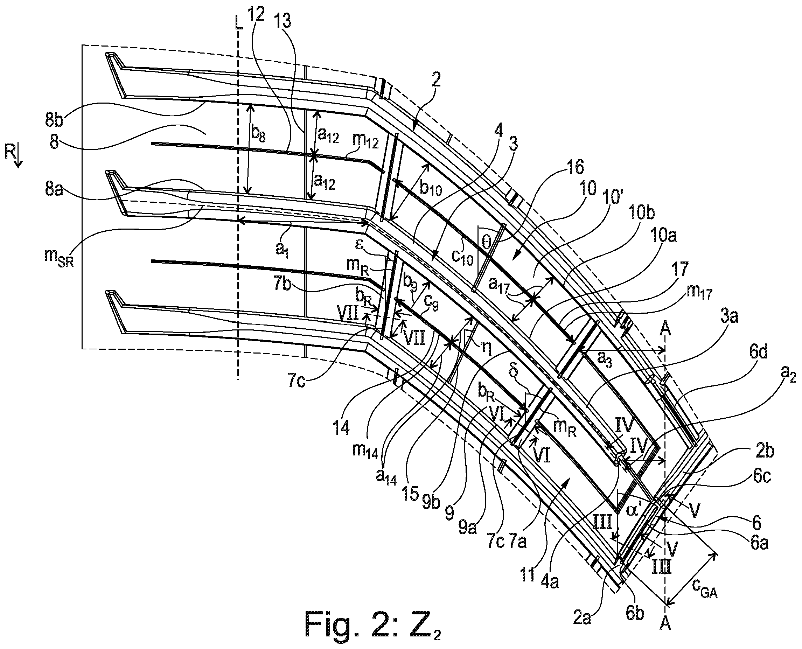

Die laufstreifeninnenseitigen Rillenabschnitte 4 der Schrägrillen 2, 3 enden laufstreifenaußenseitig - bezogen auf die jeweilige Rillenmittellinie m_{SR} - vor dem seitlichen Rand der Bodenaufstandsfläche (Linie L) in einem in axialer Richtung ermittelten Abstand a₁ (Fig. 2) von 10% bis 20% der Breite B der Bodenaufstandsfläche. Die laufstreifeninnenseitigen Rillenabschnitte 4 der endenden Schrägrillen 3 enden laufstreifeninnenseitig - bezogen auf die Rillenmittellinien m_{SR} - in einem in axialer Richtung ermittelten Abstand a₂ (Fig. 2) von 5,0 mm bis 15,0 mm vor der Reifenäquatorialebene (Linie A-A) und weisen an ihrem laufstreifeninnenseitigen Ende eine zur Laufstreifenperipherie verlaufende Endflanke 4a auf, welche, im entlang der Rillenmittellinie m_{SR} ausgerichteten Längsschnitt durch die laufstreifeninnenseitigen Rillenabschnitt 4 betrachtet (vergl. Lage der Linie IV-IV in Fig. 2), zur radialen Richtung unter einem Winkel β (Fig. 4) von bis zu 5°, insbesondere von bis zu 2°, verläuft.

Jede einmündende Schrägrille 2 weist ferner einen Rillenendabschnitt 2b auf, welcher in eine zum jeweils anderen Laufstreifenrand verlaufende Schrägrille 2 einmündet und daher zwischen der Rillenmündung 2a der zugehörigen Schrägrille 2 und der Rillenmündung 2a der in diese Schrägrille 2 mündenden Schrägrille 2 verläuft sowie beim Ausführungsbeispiel Teil des laufstreifeninnenseitigen Rillenabschnittes 4 ist. Gemäß Fig. 2 verläuft der Rillenendabschnitt 2b, in Draufsicht betrachtet und bezogen auf die Rillenmittellinie m_{SR} (Fig. 1), an der Rillenmündung 2a zur Umfangsrichtung unter Winkel α' von 20° bis 40°, insbesondere von 25° bis 35°, bevorzugt von zumindest 30°. Der Winkel α' ist bei einem gebogen verlaufenden, laufstreifeninnenseitigen Rillenabschnitt 4 bzw. bei einer gebogen verlaufenden Schrägrille 2 bezüglich einer an der Rillenmündung 2a an die Rillenmittellinie m_{SR} angelegten Tangente (nicht eingezeichnet) ermittelt. In jedem Rillenendabschnitt 2b ist jeweils eine Grundanhebung 6 ausgebildet, welche bis zur Rillenmündung 2a der zugehörigen Schrägrille 2 reicht oder zu dieser einen entlang der Rillenmittellinie m_{SR} am Niveau des Rillengrundes ermittelten Abstand von bis zu 2,0 mm aufweist. Die Grundanhebung 6 ist in radialer Richtung durch eine Deckfläche 6a (vergl. Fig. 3, Fig. 5), an der Rillenmündung 2a zugewandten Seite durch eine Seitenfläche 6b und an der der Rillenmündung 2a abgewandten Seite durch eine Seitenfläche 6c (vergl. Fig. 5) begrenzt. Die Deckfläche 6a verläuft in einer in radialer Richtung ermittelten konstanten Tiefe t_{GA} (Fig. 3, Fig. 5) von 30% bis 70%, insbesondere von 45% bis 55%, der Profiltiefe T_{SR} (Fig. 5). Die Seitenfläche 6b verläuft, im entlang der Rillenmittellinie m_{SR} ausgerichteten Querschnitt betrachtet, zur radialen Richtung unter einem Winkel von 0° bis 5° und die Seitenfläche 6c verläuft, im erwähnten Querschnitt betrachtet, zur radialen Richtung unter einem Winkel γ (Fig. 5) von 40° bis 50°. Die Grundanhebung 6 weist - ermittelt entlang der Rillenmittellinie m_{SR} sowie am Niveau des Rillengrundes der Schrägrille 2 - eine Länge c_{GA} von 8,0 mm bis 20,0 mm, insbesondere von 10,0 mm bis 16,0 mm, auf. Von der Deckfläche 6a geht ein die Grundanhebung 6 in Längserstreckung mittig durchquerender Einschnitt 6d (Fig. 3) aus, welcher eine gegenüber dem Niveau der Deckfläche 6a, in radialer Richtung ermittelte konstante Tiefe von zumindest 1,5 mm aufweist und höchstens auf die Profiltiefe T_{SR} reicht sowie ferner eine Breite von 0,4 mm bis 0,8 mm aufweist.

Gemäß Fig. 1 verlaufen in jeder Laufstreifenhälfte zwischen in Umfangsrichtung benachbarten Schrägrillen 2, 3 eine weiter laufstreifeninnenseitig ausgebildete Rille 7a und eine weiter laufstreifenaußenseitig ausgebildete Rille 7b, wobei die Rillen 7a, 7b in die jeweiligen laufstreifeninnenseitigen Rillenabschnitte 4 einmünden und jeweils eine Rillenmittellinie m_{R} (Fig. 2) aufweisen. Gemäß Fig. 2 verlaufen die Rillen 7a, in Draufsicht betrachtet, gerade sowie - bezogen auf ihre Rillenmittellinien m_{R} - zur Umfangsrichtung unter einem Winkel δ von 30° bis 40° und sind bezüglich der Umfangsrichtung gegensinnig zu den laufstreifeninnenseitigen Rillenabschnitten 4 geneigt, wobei die in den selben laufstreifeninnenseitigen Rillenabschnitt 4 einmündenden Rillen 7a in geradliniger Verlängerung zueinander und daher miteinander fluchtend verlaufen. Jene der beiden Rillen 7a, welche näher zur Reifenäquatorialebene (Linie A-A) liegt, weist - bezogen auf einen mittig auf ihrer Rillenmittellinie m_{R} liegenden Punkt - zur Reifenäquatorialebene (Linie A-A) in axialer Richtung einen Abstand a₃ von 180% bis 220% des bereits erwähnten Abstandes a₂ auf. Die Rillen 7b verlaufen, in Draufsicht betrachtet, gerade sowie - bezogen auf ihre Rillenmittellinien m_{R} - zur Umfangsrichtung unter einem Winkel ε von 3° bis 20°, insbesondere von 5° bis 15°, und sind bezüglich der Umfangsrichtung gegensinnig zu den laufstreifeninnenseitigen Rillenabschnitten 4 geneigt, wobei die Rillen 7b in Umfangsrichtung bezüglich der axialen Richtung versatzfrei aufeinanderfolgen, sodass diese zur Reifenäquatorialebene (Linie A-A) in axialer Richtung ermittelte, kleinstmögliche übereinstimmende Abstände aufweisen. Die Rillen 7a, 7b weisen an der Laufstreifenperipherie eine in Draufsicht senkrecht zur Rillenmittellinie m_{R} ermittelte konstante Breite b_{R} von 2,0 mm bis 4,0 mm und in radialer Richtung eine konstante Tiefe t_{R} (Fig. 6: Rille 7a, Fig. 7: Rille 7b) von 40% bis 70% der Profiltiefe T_{SR} auf, wobei die Tiefe t_{R} der Rille 7b vorzugsweise um zumindest 1,0 mm geringer ist als die Tiefe t_{R} der Rille 7a. Vom Rillengrund der Rillen 7a, 7b geht jeweils ein mittig ausgebildeter, in radialer Richtung verlaufender Einschnitt 7c (vergl. Fig. 6, Fig. 7) aus, welcher in radialer Richtung eine konstante Tiefe von zumindest 1,5 mm und höchstens der Profiltiefe T_{SR} sowie ferner eine Breite von 0,4 mm bis 0,8 mm aufweist und sich unter dem erwähnten Winkel δ (Rille 7a) bzw. ε (Rille 7b) durch die jeweilige Rille 7a, 7b hindurcherstreckt.

Wie Fig. 1 zeigt, weist der Laufstreifen durch die beschriebene Profilierung in jeder Laufstreifenhälfte schulterseitige Profilblöcke 8, zu diesen benachbarte halbmittige Profilblöcke 9, 10, wobei in Umfangsrichtung ein halbmittiger Profilblock 9 abwechselnd auf einen halbmittigen Profilblock 10 folgt, und von der Reifenäquatorialebene (Linie A-A) geschnittene, mittlere Profilblöcke 11 auf. Die schulterseitigen Profilblöcke 8 erstrecken sich über den Bereich der schulterseitigen Rillenabschnitte 5 und sind laufstreifeninnenseitig von den Rillen 7b begrenzt. Die halbmittigen Profilblöcke 9, 10 sind seitlich von den Rillen 7a, 7b begrenzt, weisen in Draufsicht eine parallelogrammförmige Gestalt auf und sind durch die laufstreifeninnenseitigen Rillenabschnitte 4 der Schrägrille 2, 3 voneinander getrennt, wobei der halbmittige Profilblock 9 beim Abrollen des Reifens bei Vorwärtsfahrt jeweils vor dem halbmittigen Profilblöcke 10, welcher vom Profilblock 9 durch den laufstreifeninnenseitigen Rillenabschnitt 4 einer endenden Schrägrille 3 getrennt ist, in den Untergrund eintritt. Die mittleren Profilblöcke 11 sind von je zwei Rillen 7a und den laufstreifeninnenseitigen Rillenabschnitten 4 der angrenzenden, einmündenden Schrägrillen 2 begrenzt, wobei in die mittleren Profilblöcke 11 jeweils ein Rillenendabschnitt 3a (Fig. 2) der entsprechenden endenden Schrägrille 3 hineinverläuft, wodurch der mittlere Profilblock 11 eine U-förmige Gestalt mit zum jeweils nächstliegenden Laufstreifenrand weisenden U-Schenkel aufweist. Ferner sind die mittleren Profilblöcke 11 durch die bereits erwähnten Grundanhebungen 6 verbunden.

Die weitere Ausgestaltung der Profilblöcke 8, 9, 10, 11 wird nachfolgend anhand von einzelnen Profilblöcke 8, 9, 10, 11 erläutert.

Gemäß Fig. 2 weist der schulterseitige Profilblock 8 an den angrenzenden Schrägrillen 2, 3 an der Laufstreifenperipherie eine beim Abrollen des Reifens bei Vorwärtsfahrt (Pfeil R) zuerst in den Untergrund eintretende, einlaufende Blockkante 8a und eine auslaufende Blockkante 8b sowie ferner eine senkrecht zu und zwischen den Blockkanten 8a, 8b ermittelte maximale Blockbreite b₈ (Breite an der breitesten Stelle) auf. Bei gebogen verlaufenden Blockkanten 8a, 8b erfolgt die Ermittlung der Blockbreite b₈ senkrecht zwischen an die Blockkanten 8a, 8b angelegten, parallel zueinander verlaufenden Tangenten. Der schulterseitige Profilblock 8 ist mit einem Einschnitt 12 versehen, welcher in Draufsicht parallel zu den Blockkanten 8a, 8b verläuft, den schulterseitigen Profilblock 8 innerhalb der Bodenaufstandsfläche in Längserstreckung durchquert, eine konstante Breite von 0,4 mm bis 1,2 mm, insbesondere von bis zu 0,8 mm, in radialer Richtung eine maximale Tiefe (Tiefe an der tiefsten Stelle) von zumindest 3,0 mm und höchstens 100% der Profiltiefe T_{SR} (Fig. 4, Fig. 5), insbesondere von höchstens der um 0,5 mm verringerten Profiltiefe T_{SR}, sowie zu jeder Blockkante 8a, 8b einen senkrecht zu seiner in Draufsicht dem Einschnittverlauf folgenden Einschnittmittellinie m₁₂ ermittelten Abstand a₁₂ von 45% bis 55% der maximalen Blockbreite b₈ aufweist. Ferner ist im schulterseitigen Profilblock 8 eine in Draufsicht gerade in Umfangsrichtung verlaufende, den Einschnitt 12 kreuzende, den Profilblock 8 durchquerende Mikrorille 13 mit einer Breite und einer Tiefe von jeweils 0,2 mm bis 0,6 mm ausgebildet.

Die schulterseitigen Profilblöcke 8 weisen - je nach Pitch - einen Einschnitt 12 oder zwei gleichmäßig über die Blockbreite b₈ verteilte Einschnitte 12 auf.

Der halbmittige Profilblock 9 weist - analog zum schulterseitigen Profilblock 8 - eine einlaufende Blockkante 9a, eine auslaufende Blockkante 9b und eine maximale Blockbreite b₉ auf. Ferner weist der halbmittige Profilblock 9 eine entlang einer zu den Blockkanten 9a, 9b übereinstimmend beabstandeten Blockmittellinie (nicht eingezeichnet) an der Laufstreifenperipherie gemessene Blocklänge c₉ auf und ist mit einem Einschnitt 14 versehen, welcher den halbmittigen Profilblock 9 in Längserstreckung durchquert, eine konstante Breite von 0,4 mm bis 1,2 mm, insbesondere von bis zu 0,8 mm, in radialer Richtung eine maximale Tiefe (Tiefe an der tiefsten Stelle) von 70% bis 100% der Profiltiefe T_{SR}, insbesondere von höchstens der um 0,5 mm verringerten Profiltiefe T_{SR}, sowie zu jeder Blockkante 9a, 9b einen senkrecht zu seiner Einschnittmittellinie m₁₄ ermittelten Abstand a₁₄ von 45% bis 55% der maximalen Blockbreite b₉ aufweist. Ferner ist in jedem halbmittigen Profilblock 9 eine Mikrorille 15 ausgebildet, welche, in Draufsicht betrachtet, gerade sowie zur Umfangsrichtung unter einem Winkel η von 20° bis 30° verläuft, bezüglich der Umfangsrichtung gegensinnig zu den laufstreifeninnenseitigen Rillenabschnitten 4 geneigt ist, den Einschnitt 14 kreuzt, den Profilblock 9 bezüglich seiner Blocklänge c₉ mittig durchquert und eine Breite und eine Tiefe von jeweils 0,2 mm bis 0,6 mm aufweist.

Die halbmittigen Profilblöcke 9 weisen - je nach Pitch - einen Einschnitt 14 oder zwei gleichmäßig über die Blockbreite b₉ verteile Einschnitte 14 auf.

Der halbmittige Profilblock 10 weist - analog zum halbmittigen Profilblock 9 - eine einlaufende Blockkante 10a, eine auslaufende Blockkante 10b, eine maximale Blockbreite b₁₀ und eine Blocklänge c₁₀ auf. Die Blocklänge c₁₀ beträgt 135% bis 155%, insbesondere 140% bis 150%, der Blocklänge c₉ des halbmittigen Profilblockes 9. Im halbmittigen Profiblock 10 ist ein Einschnitt 16 ausgebildet, welcher, in Draufsicht betrachtet, gerade sowie zur Umfangsrichtung unter einem Winkel θ von 20° bis 30° verläuft, den halbmittigen Profilblock 10 bezüglich seiner Blocklänge c₁₀ mittig durchquert, bezüglich der Umfangsrichtung gegensinnig zu den laufstreifeninnenseitigen Rillenabschnitten 4 geneigt ist, eine Breite von 0,6 mm bis 1,0 mm sowie in radialer Richtung eine Tiefe von 70% bis 100%, insbesondere bis zu 75%, der Profiltiefe T_{SR} aufweist und den halbmittigen Profilblock 10 in zwei Blocksegmente 10' teilt. Jedes Blocksegmente 10' ist mit einem Einschnitt 17 versehen, welcher das Blocksegment 10' in Längserstreckung des Profilblockes 10 durchquert, eine konstante Breite von 0,4 mm bis 1,2 mm, insbesondere von bis zu 0,8 mm, in radialer Richtung eine maximale Tiefe (Tiefe an der tiefsten Stelle) von 70% bis 100% der Profiltiefe T_{SR}, insbesondere von höchstens der um 0,5 mm verringerten Profiltiefe T_{SR}, sowie zu jeder Blockkante 10a, 10b einen senkrecht zu seiner Einschnittmittellinie m₁₇ ermittelten Abstand a₁₇ von 45% bis 55% der maximalen Blockbreite b₁₀ aufweist.

Die Blocksegmente 10' weisen - je nach Pitch - jeweils einen Einschnitt 17 oder zwei gleichmäßig über die Blockbreite b₁₀ verteilte Einschnitte 17 auf.

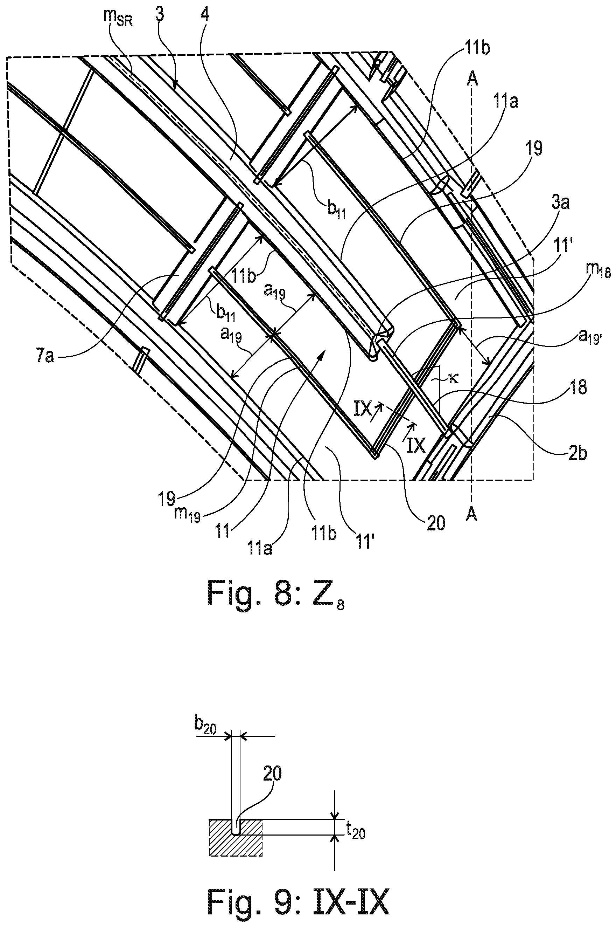

Gemäß Fig. 8 ist der mittlere Profilblock 11 mit einem Kurzeinschnitt 18 versehen, welcher in Draufsicht gerade oder gebogen, bezüglich der Umfangsrichtung gegensinnig zu den laufstreifeninnenseitigen Rillenabschnitten 4 geneigt, zur Umfangsrichtung unter einem Winkel κ von 30° bis 50°, insbesondere von 35° bis 45°, sowie ferner zwischen dem freien Ende des laufstreifeninnenseitigen Rillenabschnittes 4 der endenden Schrägrille 3 und dem in Verlängerung zu diesem Rillenabschnitt 4 liegenden Rillenendabschnitt 2b der entsprechenden einmündenden Schrägrillen 2 verläuft, über die Endflanke 3a in den Rillenabschnitt 4 einmündet, eine Breite von 0,4 mm bis 1,6 mm, insbesondere von 0,6 mm bis 1,2 mm, und zumindest über den Großteil seiner Erstreckung in radialer Richtung eine maximale Tiefe (Tiefe an der tiefsten Stelle) von 70% bis 100% der Profiltiefe T_{SR}, insbesondere höchstens der um 0,5 mm verringerten maximalen Profiltiefe T_{SR}, aufweist und den mittleren Profilblock 11 in zwei Blocksegmente 11' teilt. Bevorzugter Weise ist der Winkel κ derart gewählt, dass der Kurzeinschnitt 18 - bezogen auf seine Einschnittmittellinie m₁₈ - in tangentialer Verlängerung der Rillenmittelinie m_{SR} verläuft. "In tangentialer Verlängerung" bedeutet, dass die Einschnittmittellinie m₁₈ in Draufsicht tangential (knickfrei) an das Ende der Rillenmittelinie m_{SR} anschließt. Bei gebogen verlaufenden Kurzeinschnitt 18 bezieht sich der Winkel κ auf eine die Enden der Mittellinie m₁₈ verbindende gerade Linie.

Jedes Blocksegmente 11' weist - analog zu den halbmittigen Profilblöcken 9, 10 - eine einlaufende Blockkante 11a, eine auslaufende Blockkante 11b und eine maximale Blockbreite b₁₁ auf. Jedes Blocksegment 11' ist mit einem Einschnitt 19 versehen, welcher in Längserstreckung der Blocksegmente 11' verläuft, eine konstante Breite von 0,4 mm bis 1,2 mm, insbesondere von bis zu 0,8 mm, in radialer Richtung eine maximale Tiefe (Tiefe an der tiefsten Stelle) von zumindest 3,0 mm und höchstens 100% der Profiltiefe T_{SR}, insbesondere von höchstens der um 0,5 mm verringerten Profiltiefe T_{SR}, sowie zu jeder Blockkante 11a, 11b einen senkrecht zu seiner Einschnittmittellinie m₁₉ ermittelten Abstand a₁₉ von 40% bis 60%, insbesondere von 45% bis 55%, der maximale Blockbreite b₁₁ aufweist. Der Einschnitt 19 mündet in Richtung Laufstreifenaußenseite in die jeweilige Rille 7a ein und endet in Richtung Reifenäquatorialebene (Linie A-A) innerhalb des zugehörigen Blocksegmentes 11' in einem in tangentialer Verlängerung der Einschnittmittellinie m₁₉ ermittelten Abstand a₁₉' von 3,0 mm bis 10,0 mm, insbesondere von 4,0 mm bis 8,0 mm, vor dem Rillenendabschnitt 2b. Zwischen den innerhalb der Blocksegmente 11' liegenden, laufstreifeninnenseitigen Enden der Einschnitte 19 verläuft ein den Kurzeinschnitt 18 kreuzender, zum Kurzeinschnitt 18 und den Einschnitten 19 bezüglich der Umfangsrichtung gegensinnig geneigter Verbindungseinschnitt 20, welcher, in Draufsicht, gerade oder bogenförmig verläuft, in radialer Richtung eine Tiefe t₂₀ (Fig. 9) von 1,2 mm bis 2,5 mm, insbesondere von 1,4 mm bis 2,0 mm, besonders bevorzugt von bis 1,8 mm, und eine Breite b₂₀ (Fig. 9) von 0,4 mm bis 1,6 mm, insbesondere von 0,6 mm bis 1,2 mm, aufweist. Die Einschnitte 19 bilden gemeinsam mit dem Verbindungseinschnitt 20 eine U-förmige Einschnittkombination.

Die Erfindung ist auf das beschriebene Ausführungsbeispiel nicht beschränkt. Insbesondere können die Schrägrillen 2, 3 in Draufsicht durchgehend gebogen, durchgehend gerade oder abschnittsweise gerade verlaufen. Die schulterseitigen Profilblöcke 8, die halbmittigen Profilblöcke 9, 10 und die mittleren Profilböcke 11 können abweichend vom beschriebenen Ausführungsbeispiel mit Einschnitten und/oder Mikrorillen strukturiert sein. Die einmündenden Einschnitte 19 können in den entsprechenden Rillenendabschnitt 2b hineinverlaufen. Sämtliche Einschnitte 12, 14, 17, 19 können in Draufsicht gerade oder abschnittsweise wellenförmig sowie wellenförmig und gleichzeitig gebogen verlaufen. Die Einschnittmittellinie folgt in Draufsicht jeweils der Erstreckungsrichtung des Einschnittes und verläuft daher gerade oder durchgehend gebogen (bogenförmig). Der Abstand a₁₉' ist bei Einschnitten 19 mit geraden Einschnittmittellinien in Verlängerung der Einschnittmittellinie ermittelt.

### Bezugszeichenliste

- 1: Laufstreifen
- 2: Schrägrille
- 2a: Rillenmündung
- 2b: Rillenendabschnitt
- 3: Schrägrille
- 3a: Rillenendabschnitt
- 4: laufstreifeninnenseitiger Rillenabschnitt
- 4a: Endflanke
- 5: schulterseitiger Rillenabschnitt
- 6: Grundanhebung
- 6a: Deckfläche
- 6b, 6c: Seitenfläche
- 6d: Einschnitt
- 7a, 7b: Rille
- 7c: Einschnitt
- 8: schulterseitiger Profilblock
- 8a: einlaufende Blockkante
- 8b: auslaufende Blockkante
- 9: halbmittiger Profilblock
- 9a: einlaufende Blockkante
- 9b: auslaufende Blockkante
- 10: halbmittiger Profilblock
- 10a: einlaufende Blockkante
- 10b: auslaufende Blockkante
- 10: Blocksegment
- 11: mittlerer Profilblock
- 11: Blocksegment
- 11a: einlaufende Blockkante
- 11b: auslaufende Blockkante
- 12: Einschnitt
- 13: Mikrorille
- 14: Einschnitt
- 15: Mikrorille
- 16: Einschnitt
- 17: Einschnitt
- 18: Kurzeinschnitt
- 19: Einschnitt
- 20: Verbindungseinschnitt
- A-A: Linie (Reifenäquatorialebene)
- a₁, a₂, a₃, a₁₂, a₁₄, a₁₇, a₁₉, a₁₉': Abstand
- L: Linie (seitlicher Rand der Bodenaufstandsfläche)
- B, b_{R}, b_{SR}, b₂₀: Breite
- b₈, b₉, b₁₀, b₁₁: maximale Blockbreite
- c_{GA}: Länge
- c₉, c₁₀: Blocklänge
- h₁: Hilfslinie
- m_{R}, m_{SR}: Rillenmittellinie
- m₁₂, m₁₄, m₁₇, m₁₈, m₁₉: Einschnittmittellinie
- R: Pfeil (Abrollrichtung)
- T_{SR}: Profiltiefe
- t_{R}, t_{GA}, t₂₀: Tiefe
- Z₂, Z₈: Detail
- α, α', β, γ, δ, ε, η, θ, κ, λ: Winkel

## Patentansprüche

1. Fahrzeugluftreifen mit einem laufrichtungsgebunden ausgeführten Laufstreifen (1) mit V-förmig zueinander verlaufenden Schrägrillen (2, 3) und jeweils zumindest zwei zwischen in Umfangsrichtung benachbarten Schrägrillen (2, 3) verlaufenden, vorzugsweise bezüglich der Umfangsrichtung gegensinnig zu den Schrägrillen (2, 3) geneigten, weiteren Rillen (7a, 7b),
wobei die Schrägrillen (2, 3) und die weiteren Rillen (7a, 7b) den Laufstreifen in schulterseitige Profilblöcke (8), halbmittige Profilblöcke (9, 10), zu den in der einen Laufstreifenhälfte liegenden, halbmittigen Profilblöcken (9, 10) benachbarte mittlere Profilblöcke (11) und zu den in der anderen Laufstreifenhälfte liegenden, halbmittigen Profilblöcken (9, 10) benachbarte mittlere Profilblöcke (11) gliedern, wobei die Schrägrillen (2, 3) abwechselnd vor der Reifenäquatorialebene (Linie A-A) endende, erste Schrägrillen (3) mit einem in einen mittleren Profilblock (11) hineinverlaufenden Rillenendabschnitt (3a) und die mittleren Profilblöcke (11) mitbegrenzende, zweite Schrägrillen (2) sind,
wobei die zu dem einen Laufstreifenrand verlaufenden ersten Schrägrillen (3) zu den zu dem anderen Laufstreifenrand verlaufenden ersten Schrägrillen (3) und die zu dem einen Laufstreifenrand verlaufenden zweiten Schrägrillen (2) zu den zu dem anderen Laufstreifenrand verlaufenden zweiten Schrägrillen (2) in Umfangsrichtung versetzt sind,
**dadurch gekennzeichnet,**
**dass** die zweiten Schrägrillen (2) jeweils einen über die Reifenäquatorialebene (Linie A-A) hinausverlaufenden, zwischen zwei mittleren Profilblöcken (11) ausgebildeten und in eine zum jeweils anderen Laufstreifenrand verlaufende zweite Schrägrille (2) einmündenden Rillenendabschnitt (2b) aufweisen, in welchem jeweils zumindest eine, insbesondere genau eine, die Tiefe der zweiten Schrägrille (2) lokal verringernde Grundanhebung (6) ausgebildet ist, welche zwei mittlere Profilblöcke (11) aneinander anbindet,
wobei die weiteren Rillen (7a, 7b) derart ausgebildet sind, dass die halbmittigen Profilblöcke (9, 10) abwechselnd erste halbmittige Profilblöcke (9) mit einer an der Laufstreifenperipherie entlang einer zu den Blockkanten (9a, 9b) übereinstimmend beabstandeten Blockmittellinie gemessenen ersten Blocklänge (c₉) und zweite halbmittige Profilblöcke (10) mit einer an der Laufstreifenperipherie entlang einer zu den Blockkanten (10a, 10b) übereinstimmend beabstandeten Blockmittellinie gemessenen, gegenüber der ersten Blocklänge (c₉) größeren, zweiten Blocklänge (c₁₀) sind, wobei beim Abrollen des Reifens bei Vorwärtsfahrt jeweils der erste halbmittige Profilblock (9) vor dem von ihm durch eine erste Schrägrille (3) getrennten, zweiten halbmittigen Profilblock (10) in den Untergrund eintritt,
wobei in jedem zweiten halbmittigen Profilblock (10) jeweils ein Einschnitt (16) mit einer Breite von 0,6 mm bis 1,0 mm und einer Tiefe von 70% bis 100%, insbesondere von bis zu 75%, der Profiltiefe (T_{SR}) ausgebildet ist, welcher, in Draufsicht betrachtet, gerade, zur Umfangsrichtung gegensinnig zu den Schrägrillen (2, 3) geneigt und zur Umfangsrichtung unter einem Winkel (θ) von 20° bis 30° verläuft sowie den zweiten halbmittigen Profilblock (10) bezüglich seiner Blocklänge (c₁₀) vorzugsweise mittig in zwei Blocksegmente (10') teilt.

2. Fahrzeugluftreifen nach Anspruch 1, **dadurch gekennzeichnet, dass** die Grundanhebung (6) zumindest eines, insbesondere sämtliche, folgender Merkmale aufweist:
a) die Grundanhebung (6) reicht bis zur am einmündenden Rillenendabschnitt (2b) der zweiten Schrägrille (2) liegenden Rillenmündung (2a) oder weist zu dieser einen entlang der Rillenmittellinie (m_{SR}) am Niveau des Rillengrundes ermittelten Abstand von bis zu 2,0 mm auf,
b) die Grundanhebung (6) ist in radialer Richtung durch eine Deckfläche (6a) begrenzt, welche in einer in radialer Richtung ermittelten konstanten Tiefe (t_{GA}) von 30% bis 70%, insbesondere von 45% bis 55%, der Profiltiefe (T_{SR}) verläuft,
c) die Grundanhebung (6) weist - ermittelt entlang der Rillenmittellinie (m_{SR}) der zweiten Schrägrille (2) sowie am Niveau des Rillengrundes der zweiten Schrägrille (2) - eine Länge (c_{GA}) von 8,0 mm bis 20,0 mm, insbesondere von 10,0 mm bis 16,0 mm, auf
d) die Grundanhebung (6) ist mit einem die Grundanhebung (6) in Erstreckungsrichtung der zweiten Schrägrille (2) insbesondere mittig durchquerender Einschnitt (6d) mit einer Breite von 0,4 mm bis 0,8 mm versehen, welcher vorzugsweise gegenüber dem Niveau der Deckfläche (6a) eine Tiefe von zumindest 1,5 mm aufweist.

3. Fahrzeugluftreifen nach Anspruch 1 oder 2, **dadurch gekennzeichnet, dass** in jedem mittleren Profilblock (11) an jeder Seite des in ihn hineinverlaufenden Rillenendabschnittes (3a) der jeweiligen ersten Schrägrille (3) jeweils zumindest ein in Draufsicht zum hineinverlaufenden Rillenendabschnitt (3a) bezüglich der Umfangsichtung gleichsinnig geneigter, in die jeweils angrenzende weitere Rille (7a, 7b) einmündender Einschnitt (19) mit einer Breite von 0,4 mm bis 1,2 mm und einer maximalen Tiefe von zumindest 3,0 mm und höchstens 100% der Profiltiefe (T_{SR}) und zumindest ein zwischen den einmündenden Einschnitten (19) verlaufender und zu diesen bezüglich der Umfangsrichtung gegensinnig geneigter Verbindungseinschnitt (20) mit einer Tiefe (t₂₀) von 1,2 mm bis 2,5 mm und eine Breite (b₂₀) von 0,4 mm bis 1,6 mm verläuft.

4. Fahrzeugluftreifen nach Anspruch 3, **dadurch gekennzeichnet, dass** jeder einmündende Einschnitt (19) innerhalb des mittleren Profilblockes (11) am Verbindungseinschnitt (20) endet, sodass die einmündenden Einschnitte (19) mit dem Verbindungseinschnitt (20) eine U-förmige Einschnittkombination bilden.

5. Fahrzeugluftreifen nach Anspruch 3 oder 4, **dadurch gekennzeichnet, dass** jeder einmündende Einschnitt (19) in einem in Verlängerung seiner Einschnittmittellinie (m₁₉) ermittelten Abstand (a₁₉') von 3,0 mm bis 10,0 mm, insbesondere von 4,0 mm bis 8,0 mm, vor einem den mittleren Profilblock (11) mitbegrenzenden, einmündenden Rillenendabschnitt (2b) der entsprechenden zweiten Schrägrille (2) endet.

6. Fahrzeugluftreifen nach einem der Ansprüche 3 bis 5, **dadurch gekennzeichnet, dass** jeder einmündende Einschnitt (19) zu den an den Schrägrillen (2, 3) ausgebildeten Blockkanten (11a, 11b) des mittleren Profilblockes (11) jeweils einen senkrecht zu seiner Einschnittmittellinie (m₁₉) ermittelten Abstand (a₁₉) 40% bis 60%, insbesondere von 45% bis 55%, der senkrecht zu und zwischen den Blockkanten (11a, 11b) ermittelten maximalen Blockbreite (b₁₁) des mittleren Profiblockes (11) aufweist.

7. Fahrzeugluftreifen nach einem der Ansprüche 3 bis 6, **dadurch gekennzeichnet, dass** in jedem mittleren Profilblock (11) zwischen den einmündenden Einschnitten (19) ein den mittleren Profilblock (11) in zwei Blocksegmente (11') teilender, den Verbindungseinschnitt (20) kreuzender Kurzeinschnitt (18) mit einer Breite von 0,4 mm bis 1,6 mm, insbesondere von 0,6 mm bis 1,2 mm, und einer maximalem Tiefe von 70% bis 100% der Profiltiefe (T_{SR}) ausgebildet ist, wobei der Kurzeinschnitt (18) in den in den mittleren Profilblock (11) hineinverlaufenden Rillenendabschnitt (3a) der jeweiligen ersten Schrägrille (3) und in den an mittleren Profilblock (11) angrenzenden, einmündenden Rillenendabschnitt (2b) der jeweiligen zweiten Schrägrille (2) einmündet.

8. Fahrzeugluftreifen nach Anspruch 7, **dadurch gekennzeichnet, dass** der Kurzeinschnitt (18), in Draufsicht betrachtet, gerade oder gebogen sowie zur Umfangsrichtung jeweils unter einem Winkel (κ) von 30° bis 50°, insbesondere von 35° bis 45°, verläuft.

9. Fahrzeugluftreifen nach Anspruch 7 oder 8, **dadurch gekennzeichnet, dass** der Kurzeinschnitt (18) - in Draufsicht betrachtet und bezogen auf seine Einschnittmittellinie (m₁₈) - in tangentialer Verlängerung der Rillenmittlinie (m_{SR}) der ersten Schrägrille (3), welche den in den zugehörigen mittleren Profilblock (11) hineinverlaufenden Rillenendabschnitt (3a) aufweist, verläuft.

10. Fahrzeugluftreifen nach einem der Ansprüche 1 bis 9, **dadurch gekennzeichnet, dass** der einmündende Rillenendabschnitt (2b) der zweiten Schrägrillen (2), in Draufsicht betrachtet, an seiner Einmündung zur Umfangsrichtung unter einem Winkel (α') von 20° bis 40°, insbesondere von 25° bis 35°, und bevorzugt von zumindest 30° verläuft.

11. Fahrzeugluftreifen nach einem der Ansprüche 1 bis 10, **dadurch gekennzeichnet, dass** die weiteren Rillen (7a), welche sich weiter laufstreifeninnenseitig befinden und in dieselbe endende, erste Schrägrille (3) einmünden, in Draufsicht betrachtet, gerade und miteinander fluchtend verlaufen und/oder dass die weiteren Rillen (7b), welche sich weiter laufstreichaußenseitig befinden, in Draufsicht betrachtet, gerade verlaufen und in Umfangsrichtung bezüglich der axialen Richtung versatzfrei aufeinanderfolgen.

12. Fahrzeugluftreifen nach einem der Ansprüche 1 bis 11, **dadurch gekennzeichnet,**
**dass** die Schrägrillen (2, 3), in Draufsicht betrachtet, gerade oder durchgehend gebogen verlaufen oder
**dass** sich die Schrägrillen (2, 3), in Draufsicht betrachtet, jeweils aus einem gerade oder durchgehend gebogen verlaufenden, laufstreifeninnseitigen Rillenabschnitt (4), welcher mittlere Profilblöcke (11) und halbmittige Profilblöcke (10) mitbegrenzt, und einem gerade oder durchgehend gebogen verlaufenden, laufstreifenaußenseitigen Rillenabschnitt (5), welcher schulterseitige Profilblöcke (8) mitbegrenzt, zusammensetzen.

13. Fahrzeugluftreifen nach einem er Ansprüche 1 bis 12, **dadurch gekennzeichnet, dass** die ersten Schrägrillen (3) laufstreifeninnenseitig - bezogen auf die Rillenmittellinien (m_{SR}) - in einem in axialer Richtung ermittelten Abstand (a₂) von 5,0 mm bis 15,0 mm vor der Reifenäquatorialebene (Linie A-A) enden.

## Claims

1. Pneumatic vehicle tyre having a tread (1) of directional design which has oblique grooves (2, 3) extending in a V-shaped manner with respect to one another, and has in each case at least two further grooves (7a, 7b) extending between oblique grooves (2, 3) which are adjacent in a circumferential direction and preferably being inclined in the opposite direction to the oblique grooves (2, 3) with respect to the circumferential direction,
wherein the oblique grooves (2, 3) and the further grooves (7a, 7b) divide the tread into shoulder-side profile blocks (8), semi-central profile blocks (9, 10), central profile blocks (11) adjacent to the semi-central profile blocks (9, 10) situated in the one tread half, and central profile blocks (11) adjacent to the semi-central profile blocks (9, 10) situated in the other tread half,
wherein the oblique grooves (2, 3) are alternately first oblique grooves (3) ending before the tyre equatorial plane (line A-A) and having a groove end portion (3a) which extends into a central profile block (11) and second oblique grooves (2) which jointly delimit the central profile blocks (11),
wherein the first oblique grooves (3) extending to the one tread boundary are offset from the first oblique grooves (3) extending to the other tread boundary, and the second oblique grooves (2) extending to the one tread boundary are offset from the second oblique grooves (2) extending to the other tread boundary, in the circumferential direction,
**characterized**
**in that** the second oblique grooves (2) have in each case a groove end portion (2b) extending beyond the tyre equatorial plane (line A-A), formed between two central profile blocks (11) and opening out into a second oblique groove (2) which extends to the in each case other tread boundary, in which groove end portion there is formed in each case at least one, in particular exactly one, base elevation (6) which locally reduces the depth of the second oblique groove (2) and which connects two central profile blocks (11) to one another,
wherein the further grooves (7a, 7b) are formed in such a way that the semi-central profile blocks (9, 10) are alternately first semi-central profile blocks (9) having a first block length (c₉), which is measured along a block midline, spaced apart equally from the block edges (9a, 9b), at the tread periphery, and second semi-central profile blocks (10) having a second block length (c₁₀), which is measured along a block midline, spaced apart equally from the block edges (10a, 10b), at the tread periphery and which is longer than the first block length (c₉),
wherein, when the tyre rolls during forward travel, in each case the first semi-central profile block (9) meets the ground before the second semi-central profile block (10), which is separated from said first semi-central profile block by a first oblique groove (3),
wherein, in each second semi-central profile block (10), there is formed in each case one sipe (16) having a width of 0.6 mm to 1.0 mm and a depth of 70% to 100%, in particular of up to 75%, of the profile depth (T_{SR}), which sipe, when seen in plan view, extends straight and inclined in the opposite direction to the oblique grooves (2, 3) with respect to the circumferential direction and at an angle (θ) of 20° to 30° to the circumferential direction and divides the second semi-central profile block (10), preferably centrally in terms of its block length (c₁₀), into two block segments (10').

2. Pneumatic vehicle tyre according to Claim 1, **characterized in that** the base elevation (6) has at least one, in particular all, of the following features:
a) the base elevation (6) extends as far as the groove mouth (2a) situated on the opening-out groove end portion (2b) of the second oblique groove (2), or is at a distance of up to 2.0 mm therefrom, as determined along the groove midline (m_{SR}) at the level of the groove base,
b) the base elevation (6) is delimited in a radial direction by a top surface (6a) which extends at a constant depth (t_{GA}), as determined in the radial direction, of 30% to 70%, in particular of 45% to 55%, of the profile depth (T_{SR}),
c) the base elevation (6) has a length (c_{GA}) - as determined along the groove midline (m_{SR}) of the second oblique groove (2) and at the level of the groove base of the second oblique groove (2) - of 8.0 mm to 20.0 mm, in particular of 10.0 mm to 16.0 mm,
d) the base elevation (6) is provided with a sipe (6d) which traverses the base elevation (6), in particular centrally, in the direction of extent of the second oblique groove (2) and which has a width of 0.4 mm to 0.8 mm, said sipe preferably having a depth of at least 1.5 mm in relation to the level of the top surface (6a).

3. Pneumatic vehicle tyre according to Claim 1 or 2, **characterized in that**, in each central profile block (11), there extends on each side of the groove end portion (3a) of the respective first oblique groove (3) extending into it in each case at least one sipe (19) which, in plan view, is inclined in the same direction as the groove end portion (3a) extending into the respective central profile block with respect to the circumferential direction and which opens out into the in each case adjacent further groove (7a, 7b) and which has a width of 0.4 mm to 1.2 mm and a maximum depth of at least 3.0 mm and at most 100% of the profile depth (T_{SR}), and at least one connecting sipe (20) which extends between the opening-out sipes (19) and is inclined in the opposite direction to these with respect to the circumferential direction and has a depth (t₂₀) of 1.2 mm to 2.5 mm and a width (b₂₀) of 0.4 mm to 1.6 mm.

4. Pneumatic vehicle tyre according to Claim 3, **characterized in that** each opening-out sipe (19) ends within the central profile block (11) at the connecting sipe (20) so that the opening-out sipes (19) form together with the connecting sipe (20) a U-shaped sipe combination.

5. Pneumatic vehicle tyre according to Claim 3 or 4, **characterized in that** each opening-out sipe (19) ends at a distance (a₁₉'), as determined in an extension of the sipe midline (m₁₉) thereof, of 3.0 mm to 10.0 mm, in particular of 4.0 mm to 8.0 mm, before an opening-out groove end portion (2b) of the corresponding second oblique groove (2) jointly delimiting the central profile block (11).

6. Pneumatic vehicle tyre according to one of Claims 3 to 5, **characterized in that** each opening-out sipe (19) is in each case at a distance (a₁₉), as determined perpendicularly to the sipe midline (m₁₉) thereof, from the block edges (11a, 11b) of the central profile block (11) that are formed on the oblique grooves (2, 3) of 40% to 60%, in particular of 45% to 55%, of the maximum block width (b₁₁) of the central profile block (11), as determined perpendicularly to and between the block edges (11a, 11b).

7. Pneumatic vehicle tyre according to one of Claims 3 to 6, **characterized in that**, in each central profile block (11), there is formed between the opening-out sipes (19) a short sipe (18) which divides the central profile block (11) into two block segments (11') and which crosses the connecting sipe (20) and which has a width of 0.4 mm to 1.6 mm, in particular of 0.6 mm to 1.2 mm, and a maximum depth of 70% to 100% of the profile depth (T_{SR}), wherein the short sipe (18) opens out into the groove end portion (3a) of the respective first oblique groove (3) that extends into the central profile block (11), and opens out into the opening-out groove end portion (2b) of the respective second oblique groove (2) that is adjacent to the central profile block (11).

8. Pneumatic vehicle tyre according to Claim 7, **characterized in that** the short sipe (18), when seen in plan view, extends straight or in a curved manner and in each case at an angle (κ) of 30° to 50°, in particular of 35° to 45°, with respect to the circumferential direction.

9. Pneumatic vehicle tyre according to Claim 7 or 8, **characterized in that** the short sipe (18) - when seen in plan view and based on its sipe midline (m₁₈) - extends in the tangential extension of the groove midline (m_{SR}) of the first oblique groove (3) that has the groove end portion (3a) extending into the associated central profile block (11).

10. Pneumatic vehicle tyre according to one of Claims 1 to 9, **characterized in that** the opening-out groove end portion (2b) of the second oblique grooves (2), when seen in plan view, extends at an angle (α') of 20° to 40°, in particular of 25° to 35°, and preferably of at least 30°, to the circumferential direction at its opening-out point.

11. Pneumatic vehicle tyre according to one of Claims 1 to 10, **characterized in that** the further grooves (7a) situated further on the tread inner side and opening out into the same ending first oblique groove (3), when seen in plan view, extend straight and in alignment with one another, and/or **in that** the further grooves (7b) situated further on the tread outer side, when seen in plan view, extend straight and follow one another in the circumferential direction without an offset in the axial direction.

12. Pneumatic vehicle tyre according to one of Claims 1 to 11, **characterized**
**in that** the oblique grooves (2, 3), when seen in plan view, extend straight or so as to be curved throughout, or
**in that** the oblique grooves (2, 3), when seen in plan view, are in each case made up of a tread-inner-side groove portion (4) which extends straight or so as to be curved throughout and jointly delimits central profile blocks (11) and semi-central profile blocks (10), and a tread-outer-side groove portion (5) which extends straight or so as to be curved throughout and jointly delimits shoulder-side profile blocks (8).

13. Pneumatic vehicle tyre according to one of Claims 1 to 12, **characterized in that** the first oblique grooves (3) - based on the groove midlines (m_{SR}) - end on the tread inner side at a distance (a₂), as determined in an axial direction, of 5.0 mm to 15.0 mm from the tyre equatorial plane (line A-A).

## Revendications

1. Pneumatique de véhicule, avec une bande de roulement (1) conçue sous forme directionnelle, avec des rainures obliques (2, 3) s'étendant en forme de V l'une par rapport à l'autre et respectivement au moins deux autres rainures (7a, 7b) s'étendant entre des rainures obliques (2, 3) voisines dans la direction circonférentielle, de préférence inclinées en sens inverse des rainures obliques (2, 3) par rapport à la direction circonférentielle,
dans lequel les rainures obliques (2, 3) et les autres rainures (7a, 7b) divisent la bande de roulement en blocs de profil côté épaulement (8), en blocs de profil semi-centraux (9, 10), en blocs de profil centraux (11) voisins des blocs de profil semi-centraux (9, 10), situés dans ladite une moitié de bande de roulement, et en blocs de profil centraux (11) voisins des blocs de profil semi-centraux (9, 10) situés dans l'autre moitié de bande de roulement,
dans lequel les rainures obliques (2, 3) sont en alternance des premières rainures obliques (3) se terminant avant le plan équatorial du pneu (ligne A-A) ayant une section d'extrémité de rainure (3a) entrant dans un bloc de profil central (11), et des deuxièmes rainures obliques (2) délimitant également les blocs de profil (11) centraux,
dans lequel les premières rainures obliques (3) s'étendant vers l'un des bords de la bande de roulement sont décalées dans la direction circonférentielle par rapport aux premières rainures obliques (3) s'étendant vers l'autre bord de la bande de roulement, et les deuxièmes rainures obliques (2) s'étendant vers l'un des bords de la bande de roulement sont décalées dans la direction circonférentielle par rapport aux deuxièmes rainures obliques (2) s'étendant vers l'autre bord de la bande de roulement,
**caractérisé**
**en ce que** les deuxièmes rainures obliques (2) présentent respectivement une section d'extrémité de rainure (2b) dépassant le plan équatorial du pneu (ligne A-A), réalisée entre deux blocs de profil centraux (11) et débouchant sur une deuxième rainure oblique (2) s'étendant jusqu'à l'autre bord de bande de roulement respectivement, section dans laquelle respectivement au moins un, en particulier exactement un, rehaussement de base (6) réduisant localement la profondeur de la deuxième rainure oblique (2) est réalisé qui relie deux blocs de profil centraux (11) l'un à l'autre,
dans lequel les autres rainures (7a, 7b) sont réalisées de telle sorte que les blocs de profil semi-centraux (9, 10) sont en alternance des premiers blocs de profil semi-centraux (9) ayant une première longueur de bloc (c₉) mesurée à la périphérie de la bande de roulement le long d'une ligne centrale de bloc espacée de manière identique par rapport aux bords de bloc (9a, 9b) et des deuxièmes blocs de profil semi-centraux (10) ayant une deuxième longueur de bloc(c₁₀), supérieure à la première longueur de bloc (c₉), mesurée à la périphérie de la bande de roulement le long d'une ligne centrale de bloc espacée de manière identique par rapport aux bords de bloc (10a, 10b), lors du roulement du pneu en marche avant, le premier bloc de profil semi-central (9) pénétrant à chaque fois dans le sol avant le deuxième bloc de profil semi-central (10) qui en est séparé par une première rainure oblique (3),
dans lequel, dans chaque deuxième bloc de profil semi-central (10) est réalisée respectivement une incision (16) d'une largeur de 0,6 mm à 1,0 mm et d'une profondeur de 70 % à 100 %, notamment de jusqu'à 75 %, de la profondeur de profil (T_{SR}), laquelle, considérée en vue de dessus, est inclinée en sens inverse des rainures obliques (2, 3) par rapport à la direction circonférentielle et s'étend par rapport à la direction circonférentielle selon un angle (θ) de 20° à 30° et divise le deuxième bloc de profil semi-central (10) de préférence au centre en deux segments de bloc (10') par rapport à sa longueur de bloc (c₁₀).

2. Pneumatique de véhicule selon la revendication 1, **caractérisé en ce que** le rehaussement de base (6) présente au moins l'une, notamment toutes les caractéristiques suivantes :
a) le rehaussement de base (6) s'étend jusqu'à l'embouchure de rainure (2a) située au niveau de la section d'extrémité de rainure débouchante (2b) de la deuxième rainure oblique (2) ou présente par rapport à celle-ci une distance de jusqu'à 2,0 mm, déterminée le long de la ligne centrale de rainure (m_{SR}) au niveau du fond de rainure,
b) le rehaussement de base (6) est limité dans la direction radiale par une surface de recouvrement (6a) qui s'étend à une profondeur constante (t_{GA}) déterminée dans la direction radiale, de 30 % à 70 %, notamment de 45 % à 55 %, de la profondeur de profil (T_{SR}),
c) le rehaussement de base (6) présente, mesuré le long de la ligne centrale de rainure (m_{SR}) de la deuxième rainure oblique (2) et au niveau du fond de rainure de la deuxième rainure oblique (2), une longueur (c_{GA}) de 8,0 mm à 20,0 mm, notamment de 10,0 mm à 16,0 mm,
d) le rehaussement de base (6) est pourvu d'une incision (6d) d'une largeur de 0,4 mm à 0,8 mm, qui traverse notamment au centre le rehaussement de base (6) dans la direction d'extension de la deuxième rainure oblique (2) et qui présente de préférence une profondeur d'au moins 1,5 mm par rapport au niveau de la surface de recouvrement (6a).

3. Pneu de véhicule selon la revendication 1 ou 2, **caractérisé en ce que** dans chaque bloc de profil central (11), de chaque côté de la section d'extrémité de rainure (3a) de la première rainure oblique (3) respective qui s'étend vers l'intérieur dans celui-ci, s'étend respectivement au moins une incision (19) d'une largeur de 0,4 mm à 1,2 mm et d'une profondeur maximale d'au moins 3,0 mm et d'au plus 100 % de la profondeur de profil (T_{SR}), qui, en vue de dessus, est inclinée dans le même sens que la section d'extrémité de rainure (3a) s'étendant vers l'intérieur, par rapport à la direction circonférentielle, et qui débouche dans la rainure supplémentaire respectivement adjacente (7a, 7b), et au moins une incision de liaison (20) s'étendant entre les incisions débouchantes (19) et inclinée en sens opposé par rapport à celles-ci par rapport à la direction circonférentielle, ayant une profondeur (t₂₀) de 1,2 mm à 2,5 mm et une largeur (b₂₀) de 0,4 mm à 1,6 mm.

4. Pneumatique de véhicule selon la revendication 3, **caractérisé en ce que** chaque incision débouchante (19) à l'intérieur du bloc de profil central (11) se termine au niveau de l'incision de liaison (20), de telle sorte que les incisions débouchantes (19) forment avec l'incision de liaison (20) une combinaison d'incisions en forme de U.

5. Pneumatique de véhicule selon la revendication 3 ou 4, **caractérisé en ce que** chaque incision débouchante (19) se termine à une distance (a₁₉') de 3,0 mm à 10,0 mm, notamment de 4,0 mm à 8,0 mm, déterminée dans le prolongement de sa ligne centrale d'incision (m₁₉), avant une section d'extrémité de rainure débouchante (2b) de la deuxième rainure oblique correspondante (2) qui délimite également le bloc de profil central (11).

6. Pneumatique de véhicule selon l'une quelconque des revendications 3 à 5, **caractérisé en ce que** chaque incision débouchante (19) présente par rapport au bords de bloc (11a, 11b) du bloc de profil central (11) réalisés sur les rainures obliques (2, 3) une distance (a₁₉) déterminée perpendiculairement à sa ligne centrale d'incision (m₁₉) de 40 % à 60 %, notamment de 45 % à 55 %, de la largeur de bloc maximale (b₁₁) du bloc de profil central (11) déterminée perpendiculairement aux bords de bloc (11a, 11b) et entre ceux-ci.

7. Pneumatique de véhicule selon l'une quelconque des revendications 3 à 6, **caractérisé en ce que**, dans chaque bloc de profil central (11), entre les incisions débouchantes (19), est réalisée une incision courte (18), qui divise le bloc de profil central (11) en deux segments de bloc (11') et croise l'incision de liaison (20), ayant une largeur de 0,4 mm à 1,6 mm, notamment de 0,6 mm à 1,2 mm, et une profondeur maximale de 70 % à 100 % de la profondeur de profil (T_{SR}), l'incision courte (18) débouchant dans la section d'extrémité de rainure (3a) de la première rainure oblique respective (3) s'étendant vers l'intérieur dans le bloc de profil central (11) et dans la section d'extrémité de rainure débouchante (2b) de la deuxième rainure oblique (2) respective, adjacente au bloc de profil central (11).

8. Pneumatique de véhicule selon la revendication 7, **caractérisé en ce que** l'incision courte (18), considérée en vue de dessus, s'étend de manière rectiligne ou courbée ainsi que, par rapport à la direction circonférentielle, respectivement selon un angle (κ) de 30° à 50°, notamment de 35° à 45°.

9. Pneumatique de véhicule selon la revendication 7 ou 8, **caractérisé en ce que** l'incision courte (18) - considérée en vue de dessus et par rapport à sa ligne centrale d'incision (m₁₈) - s'étend dans le prolongement tangentiel de la ligne centrale de rainure (m_{SR}) de la première rainure oblique (3), qui présente la section d'extrémité de rainure (3a) s'étendant vers l'intérieur dans le bloc de profil central correspondant (11).

10. Pneumatique de véhicule selon l'une quelconque des revendications 1 à 9, **caractérisé en ce que** la section d'extrémité de rainure débouchante (2b) des deuxièmes rainures obliques (2) s'étend, considérée en vue de dessus, à son embouchure par rapport à la direction circonférentielle selon un angle (α') de 20° à 40°, notamment de 25° à 35°, et de préférence d'au moins 30°.

11. Pneumatique de véhicule selon l'une des revendications 1 à 10, **caractérisé en ce que** les autres rainures (7a), qui se trouvent plus à l'intérieur de la bande de roulement et débouchent dans la première rainure oblique (3) se terminant dans celles-ci, s'étendent, considérées en vue de dessus, de manière rectiligne et alignées les unes avec les autres, et/ou **en ce que** les autres rainures (7b), qui se trouvent plus à l'extérieur de la bande de roulement, s'étendent de manière rectiligne, considérées en vue de dessus, et se succèdent sans décalage dans la direction circonférentielle par rapport à la direction axiale.

12. Pneumatique de véhicule selon l'une quelconque des revendications 1 à 11, **caractérisé**
**en ce que** les rainures obliques (2, 3), considérées en vue de dessus, s'étendent de manière rectiligne ou courbée de manière continue, ou
**en ce que** les rainures obliques (2, 3), considérées en vue de dessus, se composent respectivement d'une section de rainure (4) s'étendant de manière rectiligne ou courbée de manière continue, située à l'intérieur de la bande de roulement, qui délimite également des blocs de profil centraux (11) et des blocs de profil semi-centraux (10), et d'une section de rainure (5) s'étendant de manière rectiligne ou courbée de manière continue, située à l'extérieur de la bande de roulement, qui délimite également des blocs de profil côté épaulement (8).

13. Pneumatique de véhicule selon l'une quelconque des revendications 1 à 12, **caractérisé en ce que** les premières rainures obliques (3) se terminent, du côté intérieur de la bande de roulement - par rapport aux lignes centrales de rainure (m_{SR}) - à une distance (a₂) de 5,0 mm à 15,0 mm, déterminée dans la direction axial, avant le plan équatorial du pneu (ligne A-A).
